(19) Europäisches Patentamt

European Patent Office

Office européen des brevets

(11) **EP 1 134 931 A2**

(12) **EUROPEAN PATENT APPLICATION**

(43) Date of publication:
**19.09.2001 Bulletin 2001/38**

(51) Int Cl.⁷: **H04L 12/14**, H04M 15/00

(21) Application number: **01105864.1**

(22) Date of filing: **09.03.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **16.03.2000 JP 2000079368**<br><br>(71) Applicant: **SONY CORPORATION**<br>**Tokyo (JP)**<br><br>(72) Inventors:<br>• **Murayama, Haruyoshi**<br>  **Shinagawa-ku, Tokyo (JP)** | • **Takashima, Masatoshi**<br>  **Shinagawa-ku, Tokyo (JP)**<br>• **Narita, Hideyuki**<br>  **Shinagawa-ku, Tokyo (JP)**<br>• **Ito, Yoshiyuki**<br>  **Shinagawa-ku, Tokyo (JP)**<br>• **Hiranaka, Daisuke**<br>  **Shinagawa-ku, Tokyo (JP)**<br><br>(74) Representative: **Körber, Martin, Dipl.-Phys. et al**<br>**Mitscherlich & Partner**<br>**Patentanwälte**<br>**Sonnenstrasse 33**<br>**80331 München (DE)** |

(54) **Communication control apparatus, method thereof, providing medium, and communication system**

(57) A communication control apparatus capable of easily dividing channel fees including fees for use of a communication channel charged for party communication in a variety of ways among the users engaged in the party communication, wherein provision is made of a party connection control module for controlling data transmitted by terminals via a communication channel to be transmitted to other communication devices other than the terminals which transmitted the data and a user fee determination module for calculating fees to be charged for use of the communication channel by the terminals and determining fees to be charged to users based on the calculated fees and fees to be charged for the party communication connection service.

FIG. 1

EP 1 134 931 A2

**Description**

BACKGROUND OF THE INVENTION

1. Field of the Invention

The present invention relates to a communication control apparatus and a method thereof, a providing medium, and a communication system.

2. Description of the Related Art

There is known, for example, a multi-point communication system for realizing so-called party communication where simultaneous calls are made among communication devices of a plurality of connected points via ISDN (Integrated Services Digital Network), IMT-2000 (International Mobile Telecommunication-2000), or other communication channels.

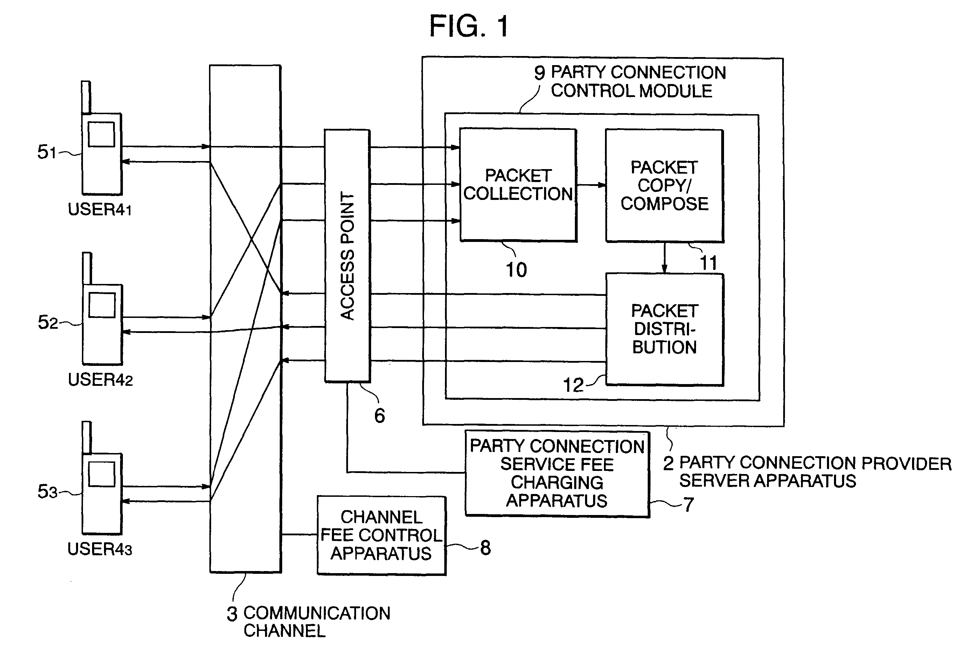

Figure 1 is a view of the configuration of a party communication system 1 of the related art.

In the party communication system 1 shown in Fig. 1, a party connection providing server 2 used by a party connection provider is connected to a communication channel 3. Users $4_1$, $4_2$, and $4_3$ perform party communication via the communication channel 3 by using terminals $5_1$, $5_2$, and $5_3$ such as cellular phones.

The communication channel 3 is connected to, for example, an access point 6 managed, for example, by the party connection provider. The users $4_1$, $4_2$, and $4_3$ receive the party connection service provided by the party connection providing server 2 by accessing (making a call) to the access point 6 when performing party communication.

The communication channel 3 is also connected to a channel fee management device 8 managed by the telecommunications carrier, wherein charging processing is performed by using the channel fee management apparatus 8 for use of the communication channel 3 by the users $4_1$, $4_2$ and $4_3$.

The channel fee management device 8 detects the number of packets transferred via the communication channel 3 and the connection time to the communication channel 3 and charges based on the results. In this case, as a general rule, the user which performed the operation for connecting to the line (who made a call) is charged.

The party connection providing server 2 comprises a party connection control module 9.

The party connection control module 9 comprises a packet collecting unit 10 for collecting video or audio packets, a packet copy/composition unit 11 for copying and combining the collected packets in accordance with need, and a packet delivery unit 12 for delivering the copied and combined packets.

Also, the access point 6 is connected to a party connection service fee charging device 7 for charging users for the party connection service by the party connection providing server 2. The access point 6 is, for example, connected to the party connection providing server 2 via a dedicated line of the party connection provider. Use of the dedicated line is not charged to the users $4_1$, $4_2$, and $4_3$.

The party connection providing server 2, for example, collects by the packet collecting unit 10 packets transmitted by the terminals $5_1$, $5_2$, and $5_3$ of the users $4_1$, $4_2$ and $4_3$ via the communication channel 3 and the access point 6 when the users $4_1$, $4_2$, and $4_3$ perform party communication.

After copying and combining the packets in accordance with need in the packet copy/composition unit 11, the packet delivery unit 12 transmits packets received from the terminals $5_2$ and $5_3$ to the terminal $5_1$, transmits packets received from the terminals $5_1$ and $5_3$ to the terminal $5_2$, and transmits packets received from the terminals $5_1$ and $5_2$ to the terminal $5_3$.

As a result, a video or audio transmitted by the terminal $5_1$ is received by the terminals $5_2$ and $5_3$, a video or audio transmitted from the terminal $5_2$ is received by the terminals $5_1$ and $5_3$, and a video or audio transmitted from the terminal $5_3$ is received by the terminals $5_1$ and $5_2$. Thus, party communication among the three, that is, the users $4_1$, $4_2$, and $4_3$, is realized.

Note that party communication among two and four or more parties can be realized by the same processing.

Namely, in the party communication system 1, the users $4_1$, $4_2$ and $4_3$ can be charged for use of the communication channel 3 by the telecommunications carrier by using the channel fee management apparatus 8, and the users $4_1$, $4_2$ and $4_3$ can be charged for use of the party connection service provided by the party connection providing server 2 by the party connection provider using the party connection service fee charging apparatus 7.

In the above party communication system 1, however, charges by the channel fee management apparatus 8 usually become expensive as the communication distances between the terminals $5_1$, $5_2$, and $5_3$ and the access point 6 become long, so there arises a difference in the channel fees in the communication channel 3 among the users $4_1$, $4_2$, and $4_3$ participating in the same party communication. Thus, there is a disadvantage that it becomes harder for a user in a remote area to participate in party communication.

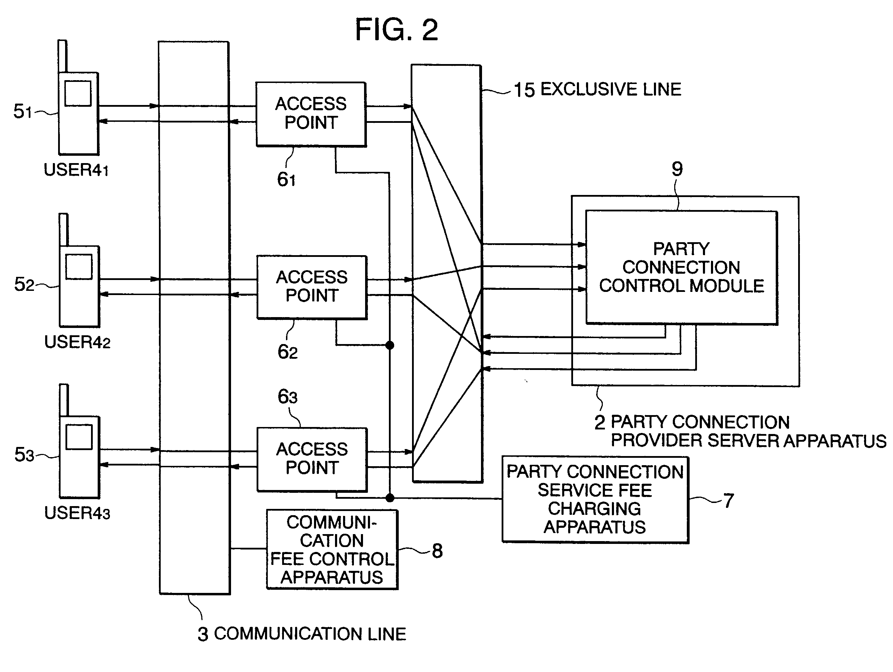

To solve the problem, for example as shown in Fig. 2, there is a party communication system wherein differences in channel fees among users $4_1$, $4_2$, and $4_3$ are reduced by connecting a plurality of access points $6_1$, $6_2$, and $6_3$ at positions away from each other by a certain distance in the communication channel 3 and having the users $4_1$, $4_2$, and $4_3$ access the nearest access points from their respective positions.

Note that the access points $6_1$, $6_2$, and $6_3$ are connected to the party connection providing server 2 via dedicated lines 15 of the party connection provider.

In the above party communication system shown in Fig. 2, however, there is a disadvantage that although the difference in the channel fees among the users participating in the party communication can be made small, it is impossible to offer a service of flexibly dividing the total of channel fees and party connection service fees among the users in various ways such as in party communication able to be participated in free wherein both the channel fees and the party connection service fees are paid by one user who sponsors the party communication.

SUMMARY OF THE INVENTION

An object of the present invention is to provide a communication control apparatus, communication system, a method thereof, and a providing medium capable of easily dividing fees including fees for use of a communication channel charged for the party communication in various ways among users who used the party communication.

According to a first aspect of the present invention, there is provided to solve the above disadvantages and to attain the above object, a communication control apparatus for providing a service for controlling data transmitted by a plurality of communication devices via a communication channel so as to be transmitted to communication devices other than the communication device which transmitted the data, comprising a channel fee calculation means for calculating a first fee to be charged for usage of the communication channel by the plurality of communication devices, a service handling fee calculation means for calculating a second fee to be charged for usage of the service, and a fee determining means for determining a third fee to be charged to users of the communication devices based on the first fee and the second fee.

The actions of the communication control apparatus of the present invention are as follows.

Under the control by the communication control apparatus of the present invention, data transmitted by a plurality of communication devices via a communication channel are transmitted to the communication devices other than the ones transmitting the data.

The channel fee calculation means, for example, calculates a first fee to be charged for use of the communication channel by the plurality of communication devices based on data obtained by monitoring the communication.

Next, the fee determining means determines third fee to be charged to users of the communication devices based on the first fee and the second fee.

The communication control apparatus of the present invention can charge the fees to be charged for use of the communication channel by the plurality of communication devices and the fees charged for the control by the communication control apparatus all together. Accordingly, it is possible to flexibly divide etc. the fees charged for the party communication based on a set charging method when a participant in so-called party communication starts the party communication, during the party communication, or at the end of the party communication. For example, a charging method may be employed which divides the fees equally among all participants, charges the total fees to one participant, etc.

Note that in the present invention, when the business managing the communication and the business managing the communication channel are different, use of the communication channel is made not to be charged to users of the communication devices by the business of the communication channel.

In the communication control apparatus of the present invention, preferably the channel fee calculation means calculates the first fee based on a charging system established by a telecommunications carrier providing the communication channel.

The communication control apparatus of the present invention preferably further comprises a payment management means for managing a procedure of payment of the first fee to the telecommunications carrier providing the communication channel.

The communication control apparatus of the present invention preferably further comprises a communication control means for receiving data transmitted by a plurality of communication devices via the communication channel, combining or copying the received data in accordance with need, then delivering it to communication devices other than the communication devices which transmitted the data.

Further, in the communication control apparatus of the present invention, preferably the fee determining means determines the third fee so that the total amount of the first fee and the second fees is charged divided among the users of the plurality of communication devices or charged to a user of one of the communication devices in accordance with an instruction from a user of a communication device transmitting and receiving the data.

Further, in the communication control apparatus of the present invention, preferably the fee determining means successively determines the third fees through the communication and notifies the determined third fee to the users during a procedure wherein a plurality of the communication devices perform communication by mutually transmitting and receiving the data.

Further, in the communication control apparatus of the present invention, preferably the apparatus further comprise a detection means for detecting the number of packets to be transmitted and received by the plurality of communication devices or a time during which the plurality of communication devices are connected to the communication channel, wherein the channel fee calculation means calculates the first fee based on detection results by the detection means.

Further, in the communication control apparatus of the present invention, preferably the data is data of at least a video or audio; and the communication control apparatus further comprising a communication control means for controlling data transmitted by the plurality of communication devices via the communication channel to be transmitted to communication devices other than the communication devices which transmitted the data so that calls are simultaneously made between users of the plurality of communication devices.

According to a second aspect of the present invention, there is provided a communication system comprising a channel fee management apparatus for managing fees to be charged for use of a communication channel by a communication device; a communication control apparatus for providing a service for controlling data transmitted by a plurality of communication devices via the communication channel to be transmitted to communication devices other than the communication devices which transmitted the data; and wherein the communication control apparatus comprises a channel fee calculation means for calculating a first fee to be charged for usage of the communication channel by the plurality of communication devices, a service handling fee calculation means for calculating a second fee to be charged for usage of the service, and a channel fee determining means for determining a third channel fee to be charged to users of the communication devices based on the first channel fee and the second channel fee.

The actions of the communication system of the present invention are as follows:

Under the control by the communication control apparatus of the present invention, data transmitted by a plurality of communication devices via a communication channel are transmitted to the communication devices other than the ones transmitting the data.

The channel fee calculation means, for example, calculates fees to be charged for use of the communication channel by the plurality of communication devices based on data obtained by monitoring the communication.

Next, the fee determining means determines the fees to be charged to users of the communication devices based on the calculated fees and the fees to be charged for the control by the communication control apparatus.

At this time, in the communication system of the present invention, the fee determining means notifies predetermined information to the channel fee management apparatus so that charges to the users of the communication devices for use of the communication channel are not duplicated with the channel fee management apparatus.

Further, in the communication system of the present invention, preferably the channel fee determining means receives from the channel fee management apparatus data regarding channel fees to be charged for use of the communication channel at the time the plurality of communication devices transmit and receive the data.

Further, in the communication system of the present invention, preferably the communication channel is provided with one or plurality of access points for relaying communication between the communication control apparatus and the communication devices and users of the communication devices are charged channel fees for use of the communication channel for communication with the access points via the communication channel.

Further, in the communication system of the present invention, preferably a channel fee management apparatus and communication control apparatus are managed by the same business.

According to a third aspect of the present invention, there is provided a communication control method being a communication control method for providing a service for controlling data transmitted from a plurality of communication devices via a communication channel to be transmitted to communication devices other than the communication devices which transmitted the data, comprising the steps of calculating a first fees to be charged to users of the communication devices based on the calculated fees and fees to be charged for use of the communication channel, calculating a second fee to be charged for usage of the service, and determining a third fee to be charged to users of the communication devices based on the first fee and the second fee.

According to a fourth aspect of the present invention, there is provided a providing medium being a computer program for providing a service for controlling data transmitted from a plurality of communication devices via a communication channel to be transmitted to communication devices other than the communication devices which transmitted the data, comprising the routines for calculating fees to be charged for usage of the communication channel by the plurality of communication devices, and determining fees to be charged to users of the communication devices based on the calculated fees and fees to be charged for the controlling by the communication control apparatus.

Further, in the providing medium of the present invention, preferably the program further includes a routine for receiving data transmitted by a plurality of communication devices via the communication channel, composing or copying the received data in accordance with need, then delivering it to communication devices other than the communication devices which transmitted the data.

Further, in the providing medium of the present invention, preferably the data is data of at least a video or audio; and the computer program further comprising a routine for controlling data transmitted by the plurality of communication devices via the communication channel to be transmitted to communication devices other than the communication devices which transmitted the data so that calls are simultaneously made between users of the plurality of communication devices.

BRIEF DESCRIPTION OF THE DRAWINGS

These and other objects and features of the present invention will become clearer from the following description of the preferred embodiments given with reference to the accompanying drawings, in which:

Fig. 1 is a view of the overall configuration of a party communication system of the related art;
Fig. 2 is a view of the overall configuration of another party communication system of the related art;
Fig. 3 is a view of the overall configuration of a party communication system of a first embodiment of the present invention;
Fig. 4 is a block diagram of functions of a user fee determining data generation module shown in Fig. 3;
Fig. 5 is a block diagram of functions of a user fee determining module shown in Fig. 3;
Fig. 6 is a flow chart of processing of a party connection providing server shown in Fig. 3;
Fig. 7 is a flow chart of processing of a party connection providing server shown in Fig. 3;
Fig. 8 is a view for explaining operations when a user selects a charging method for party communication;
Fig. 9 is a view of the overall configuration of a party communication system of a second embodiment of the present invention;
Fig. 10 is a flow chart of processing of a party connection providing server shown in Fig. 9;
Fig. 11 is a flow chart of processing of a party connection providing server shown in Fig. 9;
Fig. 12 is a view of the overall configuration of a party communication system of a third embodiment of the present invention; and
Fig. 13 is a view of the overall configuration of a party communication system of a fourth embodiment of the present invention.

DESCRIPTION OF THE PREFERRED EMBODIMENTS

Below, preferred embodiments will be described with reference to the accompanying drawings.

First Embodiment

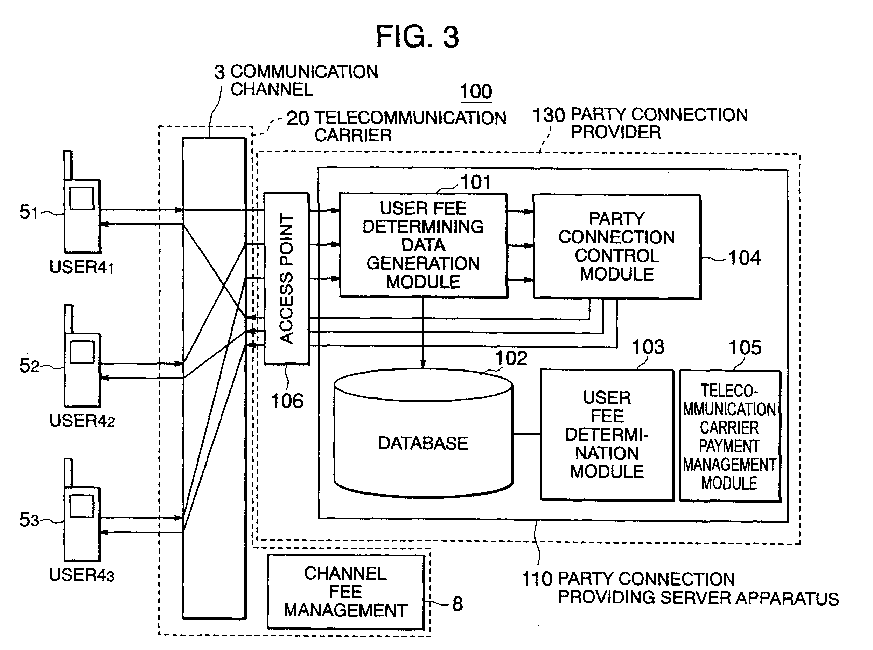

Figure 3 is a view of the overall configuration of a party communication system 100 of the present embodiment.
As shown in Fig. 3, the party communication system 100 is realized by using, for example, a communication channel 3, terminals $5_1$ to $5_3$ used by users $4_1$ to $4_3$, a channel fee management apparatus 8, a party connection providing server 110, and an access point 106.
The communication channel 3 and the channel fee charging apparatus 8 are used for business purposes by a telecommunications carrier 20 and managed by the telecommunications carrier 20.
Also, the party connection providing server 110 is used for party connection service by a party connection business 130 and used and managed by the part connection business 130.
Here, the communication channel 3 corresponds to a communication channel of the present invention, the terminals $5_1$ to $5_3$ correspond to communication devices of the present invention, the channel fee management apparatus 8 corresponds to a channel fee management apparatus of the present invention, the party connection providing server 110 corresponds to a communication control apparatus of the present invention, and the access point 106 corresponds to an access point of the present invention.

(Communication channel 3)

The communication channel 3 is not particularly limited, but for example is an ISDN, IMT-2000, or other communication channel.
Here, when using an MT-2000 line as the communication channel 3, the bit rate is higher in downstream lines from the party communication providing server 110 to the terminals $5_1$ to $5_3$ than that in upstream lines from the terminals $5_1$ to $5_3$ to the party communication providing server 110.

(Terminals $5_1$ to $5_3$)

The terminals $5_1$ to $5_3$ are, for example, cellular phones. They are connected to the party communication providing server 110 via the communication channel 3 and the access point 106 by the users $4_1$ to $4_3$ calling to the access point 106.

Each of the terminals $5_1$ to $5_3$ comprises, for example, a display for displaying a video in accordance with received video packets, a camera for inputting a video to be transmitted, a speaker for outputting a received audio, and a microphone for inputting audio to be transmitted.

(Channel fee Management Apparatus 8)

The channel fee charging apparatus 8 charges general users, businesses, etc. which use the communication channel 3 for their use. The telecommunications carrier 20 bills the users of the communication channel 3 for channel fees based on fee information obtained by the channel fee charging apparatus 8.

(Access Point 106)

The access point 106 is connected to a predetermined position in the communication channel 3 and relays communication between the communication channel 3 and the party connection providing server 110.

The access point 106 and the party connection providing server 102 are connected, for example, by a dedicated line of the party connection business 130.

For example, when communicating between the terminals $5_1$ to $5_3$ and the party communication providing server 110 via the communication channel 3 and the access point 106 by calling from the terminals $5_1$ to $5_3$, fees for use of the communication channel 3 are charged to the users $4_1$ to $4_3$ of the terminals $5_1$ to $5_3$ by the telecommunications carrier 20.

(Party Connection Providing Server 110)

The party connection providing server 110 comprises, for example as shown in Fig. 3, a user fee determining data generation module 101, a database 102, a user fee determination module 103, a party connection control module 104, and a telecommunications carrier payment management module 105.

Here, the party connection control module 104 corresponds to a communication control means of the present invention, and the telecommunications carrier payment management module 105 corresponds to a payment management means of the present invention.

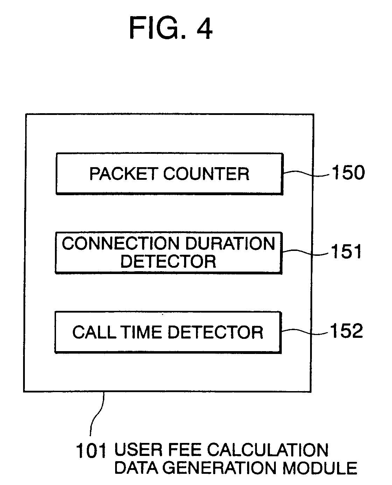

The user fee determining data generation module 101 comprises, for example as shown in Fig. 4, a packet counter 150, a connection time detector 151, and a call time detector 152.

The packet counter 150 counts the number of packets received from the terminals $5_1$ to $5_3$ via the communication channel 3 and the access point 106 and stores the counted result in the database 102. At this time, the packet counter 150 separately counts the number of packets received by the respective terminals $5_1$ to $5_3$.

The connection time detector 151 detects the connection time of the terminals $5_1$ to $5_3$ to the access point 106 and stores the detected results in the database 102. At this time, the connection time detector 151 separately detects the connection time of the terminals $5_1$ to $5_3$ to the access point 106.

The call time detector 152 separately detects the times the users $4_1$ to $4_3$ make calls based on the packets received from the terminals $5_1$ to $5_3$ and stores the detected results in the database 102.

The database 102 stores the results of the packet count, connection time detection, and call time detection input from the user fee determining data generation module 101.

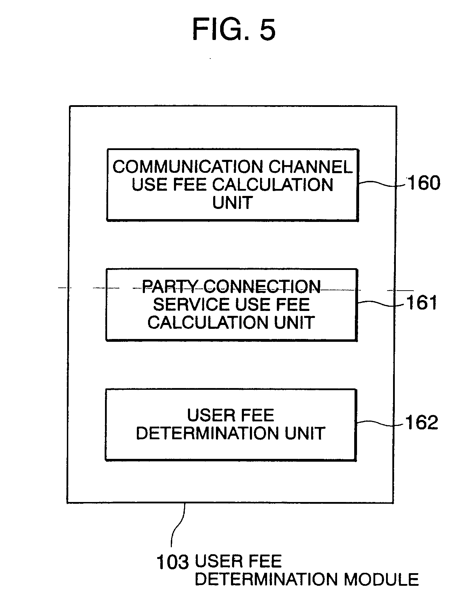

The user fee determination module 103 comprises, for example as shown in Fig. 5, a communication channel fee calculation unit 160, a party connection service usage fee calculation unit 161, and a user fee determination unit 162.

Here, the communication channel fee calculation unit 160 corresponds to a channel fee calculation means of the present invention, the party connection service use fee calculation means corresponds to a service handling fee calculation means, and the user fee determination unit 162 corresponds to a fee determinating means of the present invention.

The communication channel fee calculation unit 160 calculates the communication channel fees to be charged to the users by the telecommunications carrier for use of the communication channel 3 by the users $4_1$ to $4_3$, for example, based on at least one of the packet counting result and connection time detection result of the terminals $5_1$ to $5_3$ read from the database 102.

The party connection service usage fee calculation unit 161 calculates the party connection service usage fees charged by the party connection provider for use of the party communication by the users $4_1$ to $4_3$ and calculates

the total amount of the party connection service usage fees, for example, based on at least one of the packet counting result and connection time detection result read from the database 102 and a service fee reference determined in advance.

The user fee determination unit 162 determines the amounts to be billed to the users $4_1$ to $4_3$ by using fees calculated by the communication channel fee calculation unit 160 and party connection service usage fee calculation unit 161, for example, based on a charging method instructed by the users.

(Party Connection Control Module 104)

The party connection control module 104 is the same, for example, as the party connection control module 9 of the party connection providing server 2 of the related art explained above and comprises a packet collection unit 10, a packet copy/composition unit 11, and a packet delivery unit 12.

Namely, the packet collection unit 10 collects video and audio packets received from the terminals $5_1$ to $5_3$.

The packet copy/composition unit 11 copies and combines the packets collected by the packet collection unit 10 in accordance with need.

The packet delivery unit 12 performs processing for transmitting the packets copied and combined by the packet copy/composition unit 11 to the terminals $5_1$ to $5_3$.

Specifically, when the users $4_1$, $4_2$, and $4_3$ are engaged in party communication, the packet collection unit 10 receives packets transmitted by the terminals $5_1$, $5_2$, and $5_3$ of the users $4_1$, $4_2$, and $4_3$ via the communication channel 3 and the access point 106.

Then, the packet copy/composition unit 11 copies and combines packets received from the terminals $5_2$ and $5_3$ to generate packets to be transmitted to the terminal $5_1$, copies and combines packets received from the terminals $5_1$ and $5_3$ to generate packets to be transmitted to the terminal $5_2$, and copies and combines packets received from the terminals $5_1$ and $5_2$ to generate packets to be transmitted to the terminal $5_3$.

The packet delivery unit 12 transmits the packets generated in the packet copy/composition unit 11 to the corresponding terminals $5_1$ to $5_3$ via the access point 106 and the communication channel 3.

As a result, a video and audio transmitted by the terminal $5_1$ are received by the terminals $5_2$ and $5_3$, a video and audio transmitted by the terminal $5_2$ are received by the terminals $5_1$ and $5_2$, and a video and audio transmitted by the terminal $5_3$ are received by the terminals $5_1$ and $5_2$, so that party communication among the three, that is, the users $4_1$, $4_2$, and $4_3$, can be realized.

Note that party communication between two and four or more parties can be realized by the same processing.

(Telecommunications Carrier Payment Management Module 105)

The telecommunications carrier payment management module 105 performs processing relating to the procedure for payment to the telecommunications carrier 20 by using the total amount of the communication channel fees calculated by the communication channel fee calculation unit 160 in the user fee determination module 103 shown in Fig. 3 and Fig. 5 as fees for use of the communication channel 3 by the party communication by the users $4_1$ to $4_3$ as explained above.

Below, operations of the party communication system 100 will be explained by focusing on the processing in the party communication providing server 110.

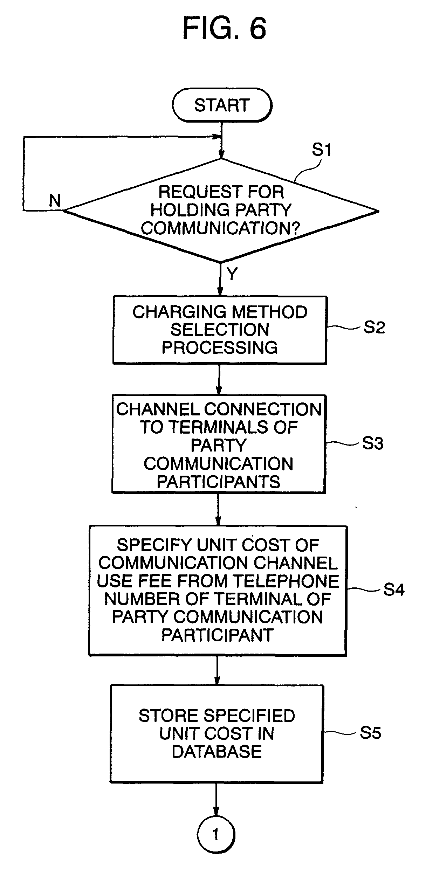

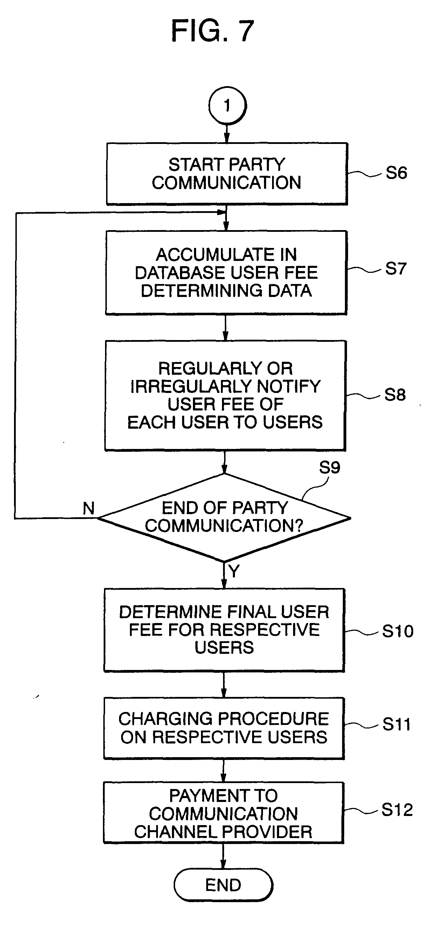

Figures 6 and 7 are flow charts of processing in the party connection providing server 110.

Step S1:

For example, when the party connection control module 104 in the party connection providing server 110 receives a party opening request from the terminal $5_1$ of the user 41 acting as the sponsor of the party communication via the telecommunications carrier 20 and the access point 106, processing in step S2 is carried out.

Step S2:

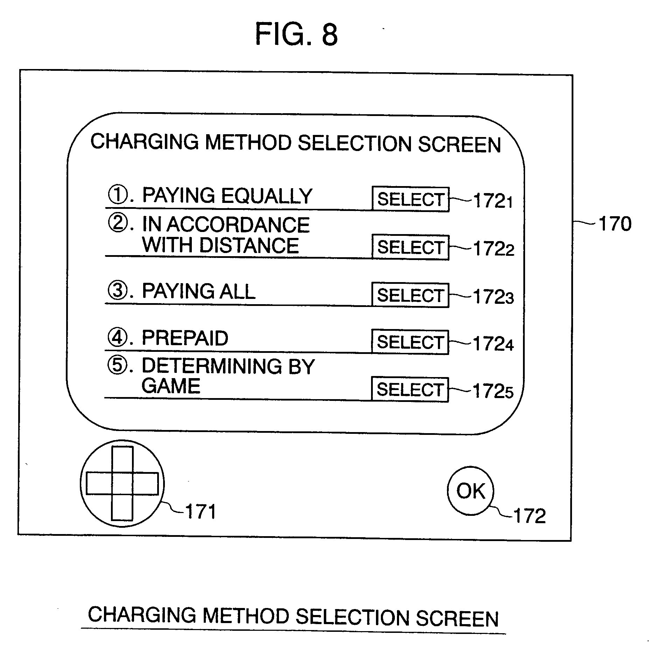

When the party connection control module 104 receives the party opening request from the terminal $5_1$, a video signal for displaying a charging method selection screen 170 shown in Fig. 8 to get the user to select a charging method is sent to the terminal $5_1$.

On the charging method selection screen 170, for example "1. Split equally", "2. Charge in accordance with distance", "3. Pay all", "4. Prepaid", "5. Determine by game", etc. are displayed as charging methods to choose from as shown in Fig. 8.

"1. Split equally" is a charging method by which the fees for the party communication are equally split among all users participating in the party communication.

"2. Charge in accordance with distance" is a charging method by which the usage fees of the communication channel 3 in the fees for the party communication are split among all of the users participating in the party communication in accordance with the distances between the terminals $5_1$ to $5_3$ and the access point 106 and by which the party connection service usage fees are equally split by all of the users.

"3. Pay all" is a charging method by which all of the fees for the party communication are paid by the sponsor holding the party.

"4. Prepaid" is a charging method by which the fees for the party communication to the party connection business 130 are paid in advance by the users.

"5. Determine by game" is a charging method of by which the fees for the party communication are divided and paid in accordance with results of a game among the users participating in the party communication.

The user 41 sponsoring the party communication selects a charging method from the charging methods 1 to 5 by viewing the charging method selection screen 170 displayed on the display of the terminal $5_1$ and operating one of the selection buttons $172_1$ to $172_5$ by using an operation display 171 etc., then operates a confirmation button display 172. Charging method selection information for specifying the designated charging method is transmitted from the terminal $5_1$ to the party connection providing server 110 and stored in the database 102 in the party connection providing server 110. Note that the charging method may be changed, for example, by operations by the terminals $5_1$ to $5_3$ by the users $4_1$ to $4_3$ during the party communication or after finishing the party communication.

Step S3:

The party connection control module 104 connects the terminals $5_1$ to $5_3$ of the users $4_1$ to $4_3$ participating in the party communication via the communication channel 3 and the access point 106.

Connection is performed so that use of the communication channel 3 by the users $4_1$ to $4_3$ is charged to the party connection business 130 by the channel fee management apparatus 8. For example, a call is made from the party connection providing server 110 to the terminals $5_1$ to $5_3$ and a call is made by the terminals $5_1$ to $5_3$ to the party connection providing server 110 by using a service where the call recipient pays for the call (for example, a toll-free dial) provided by the telecommunications carrier 20. In this case, the fees for use of the communication channel 3 in the case of calling from the terminals $5_1$ to $5_3$ to the party communication providing server 110 and a case of calling from the party communication providing server 110 to the terminals $5_1$ to $5_3$ may be compared to choose the cheaper one.

Step S4:

For example, the user fee determining data generation module 101 specifies the usage fees of the communication channel 3 per unit time for each of the terminals $5_1$ to $5_3$ based on the telephone numbers of the terminals $5_1$ to $5_3$ and a usage fee schedule of the communication channel 3 prepared in advance.

Step S5:

The user fee determination module 103 stores in the database 102 the fees for use of the communication channel 3 per unit time specified in Step S4 for the respective terminals $5_1$ to $5_3$.

Step S6:

The packet collection unit 10 in the party connection control module 104 receives packets transmitted by the terminals $5_1$, $5_2$, and $5_3$ of the users $4_1$, $4_2$, and $4_3$ via the communication channel 3 and the access point 6.

Then, the packet copy/composition unit 11 copies and combines packets received from the terminals $5_2$ and $5_3$ to generate packets to be transmitted to the terminal $5_1$, copies and combines packets received from the terminals $5_1$ and $5_3$ to generate packets to be transmitted to the terminal $5_2$, and copies and combines packets received from the terminals $5_1$ and $5_2$ to generate packets to be transmitted to the terminal $5_3$.

The packet delivery unit 12 transmits the packets generated in the packet copy/composition unit 11 to the corresponding terminals $5_1$ to $5_3$ via the access point 106 and the communication channel 3.

As a result, a video and audio transmitted by the terminal $5_1$ are received by the terminals $5_2$ and $5_3$, a video and audio transmitted by the terminal $5_2$ are received by the terminals $5_1$ and $5_2$, and a video and audio transmitted by the terminal $5_3$ are received by the terminals $5_1$ and $5_2$, so that party communication among the three, that is, the users $4_1$, $4_2$, and $4_3$, can be realized.

Step S7:

The user fee determination data generation module 101 generates user fee determination data by using the packet counter 150, connection time detector 151, and call time detector 152 shown in Fig. 4 and stores the same in the database 102 while monitoring the party communication.

Step S8:

The user fee determination module 103 uses the communication channel fee calculation unit 160, party connection service usage fee calculation unit 161, and user fee determination unit 162 shown in Fig. 5 to calculate respective user fees for the users $4_1$ to $4_3$ at a predetermined timing in the middle of the party communication and transmits the same to the terminals $5_1$ to $5_3$ regularly or irregularly via the access point 106 and the communication channel 3 to notify the users $4_1$ to $4_3$.

As a result, it becomes easy for the users $4_1$ to $4_3$ to manage payments incurred due to the party communication and to prevent trouble in advance.

Step S9:

The party connection control module 104 judges whether the party communication is finished or not. It performs the processing of step S10 when it is judged to be finished, while returns to the processing of step S7 when it not.

Step S10:

When the party communication is finished, the user fee determination module 103 notifies the users $4_1$ to $4_3$ of the user fees, finally calculated for the users $4_1$ to $4_3$, by transmitting them via the access point 106 and the communication channel 3 to the terminals $5_1$ to $5_3$.

Step S11:

The user fee determination module 103, for example, performs the procedure and processing for payment of the amounts billed to the users using electronic money, credit cards, etc. with the terminals $5_1$ to $5_3$ of the users $4_1$ to $4_3$. Note that the procedure for billing the users $4_1$ to $4_3$ bu the party connection business 130 may be performed, for example, monthly.

Step S12:

The telecommunications carrier fee management module 105 performs processing regarding the procedure for payment to the telecommunications carrier 20 of the total amount of the communication channel fees calculated by the communication channel fee calculation unit 160 in the user fee determination module 103 shown in Figs. 3 and 5 as the fees for use of the communication channel 3 for the party communication by the users $4_1$ to $4_3$.

Below, the fees to be billed to the users $4_1$ to $4_3$ when applying a variety of charging methods in the party communication system shown in Fig. 3 will be explained by using specific examples.

(First Example)

In this example, the case will be explained where the user $4_1$ uses a local call of ¥ 0.1/packet, the user $4_2$ uses a call from an adjacent city costing ¥ 0.2/packet, and the user $4_3$ uses a long distance call of ¥0.4/packet; the users each transmit 3000 packets in the party communication, and "split equally" shown in Fig. 8 is selected as the charging method.

In this case, each of the terminals $5_1$ to $5_3$ of the users $4_1$ to $4_3$ transmits 3000 packets and receives 6000 packets. These are counted by the packet counter 150 in the user fee determining data generation module 101 shown in Fig. 4. The results of the packet counting is stored in the database 102.

Then, the communication channel fee calculation unit 160 shown in Fig. 5 calculates the channel fees to be charged for use of the communication channel 3 by the users $4_1$ to $4_3$ based on the formula (1) below. The fees become ¥ 6300.

$$0.1*(3000+6000)+0.2*(3000+6000)+0.4*(3000+6000)= 6300 ... (1) \tag{1}$$

The party connection service usage fee calculation unit 161, for example, decides to bill ¥ 2100 in total to the users $4_1$ to $4_3$ for providing the party communication.

Next, the user fee determination unit 162 determines a user fee of ¥ 2800 for the users $4_1$ to $4_3$ obtained by equally dividing among the three users $4_1$ to $4_3$ the total of the ¥ 6300 for use of the communication channel 3 and ¥2100 for use of the party communication, that is, ¥ 8400, and stores the same in the database 102.

On the other hand, in the method of the related art, the amount billed for the party communication provided by the party connection business 130 could be made ¥700 obtained by equally dividing the fees among the three users $4_1$ to $4_3$ ( ¥2100/3), however, there was a disadvantage that the communication channel fees for use of the communication channel 3 became ¥900 for the user $4_1$, ¥1800 for the user $4_2$, and ¥3600 for the user $4_3$, so the payment by the user $4_3$ became large. Note that, in order to divide the fees equally, it was necessary for the users $4_1$ to $4_3$ to adjust the fees among themselves by referring to the detailed statements etc. issued by the telecommunications carrier 20. This was troublesome.

(Second Example)

In this example, a case will be explained where the party communication in the above first example is sponsored by the user $4_1$, the users $4_2$ and $4_3$ are called to participate by the user $4_1$, and the fees for the party communication are all paid by the user $4_1$.

Namely, this example is a case where "3. Pay all" shown in Fig. 8 is selected by the user $4_1$ sponsoring the party.

In this case, the total of the ¥6300 channel fees charged for use of the communication channel 3 by the users $4_1$ to $4_3$ and the ¥2100 for use of the party communication, that is, ¥8400, becomes the amount billed to the user $4_1$ by the party connection business 130. The users $4_2$ and $4_3$ are not charged for the party communication.

On the other hand, in the related art, the user $4_1$ had to pay back the users $4_2$ and $4_3$ the fees for use of the communication channel 3 charged to the users $4_2$ and $4_3$ later on. This was very troublesome for the users.

Also, the fees for use of the communication channel 3 by the users $4_2$ and $4_3$ could be billed to the user $4_1$, but the user $4_1$ would end up being also charged the communications fees for use of the communication channel 3 by the users $4_2$ and $4_3$ for other purposes. It is difficult to charge only for the specific party communication.

(Third Example)

In this example, a case will be explained where the users $4_1$, $4_2$, and $4_3$ respectively pay ¥2000, ¥2000, and ¥5000 for the channel fees of the communication channel 3, the party communication ends when the total amount of ¥9000 is used up, and the party connection service fees of the party communication are equally paid by the users $4_1$ to $4_3$.

A case will be considered where the user $4_1$ uses a local call of ¥0.1/packet, the user $4_2$ uses a call from an adjacent city costing ¥0.2/packet, and the user $4_3$ uses a long distance call of ¥0.4/packet, the packet transmission rate of the respective users is 300 packet/minute, and the packet receiving rate is 600 packet/minute. In this case, the fees for use of the communication channel 3 become ¥630 from equation (2) below.

$$0.1*(300+600)+0.2*(300+600)+0.4*(300+600)=630$$

Accordingly, the time for which the communication channel 3 can be used for ¥9000 is about 14 minutes and 18 seconds (=9000/630=14.3).

The party connection control module 104, for example, monitors the result of detection of the connection time by the connection time detector 151 in the user fee determining data generation module 101 in Fig. 4. Then, for example, when assuming that the transmission/receiving rate of packets is constant, the party connection control module 104 transmits a notice of completion of the party communication to the terminals $5_1$ to $5_3$ and ends the party communication when the result of detection of the connection time becomes 14 minutes and 18 seconds.

Note that the party connection providing server 110 may notify the terminals $5_1$ to $5_3$ of the time from the start or the party communication or the remaining time for the communication.

In this case, for example, when assuming that the service fees for the party communication provided by the party connection business 130 is ¥2100, it is split to ¥700 for each of the users $4_1$ to $4_3$.

Accordingly, the user fees would be ¥2700 (=¥2000+¥700) for the user $4_1$, ¥2700 (=¥2000+¥700) for the user $4_2$, and ¥5700 (=¥5000+¥700) for the user $4_3$.

When realizing the above by the method of the related art, the users themselves have to calculate the communication time from the upper limit of amount, end the communication by themselves when the time has passed, refer to the detailed statements etc. of the use of the communication channel 3, and adjust the fees between the users. This is not realistic.

(Fourth Example)

In this example, a case will be explained where the users $4_1$ to $4_3$ play some kind of game through the party communication and the fees during the game are charged to the loser.

In this case, ¥2000 is the total of the fees for use of the communication channel 3 and service fees for the party connection business 130. When the user $4_2$ loses the game through the party communication, the party communication providing server 110 performs processing to confirm approval for payment of the entire amount with the terminal $5_2$ and bills the user $4_2$ for ¥2000.

Further, by developing this method further, the game can be played a plurality of times and fees charged each time.

For example, when the losers in the first, second, and third rounds are the users $4_2$, $4_3$, and $4_1$, respectively, the fee ¥2000 for the first round is paid in full by the user $4_2$, the fee ¥1500 for the second round is paid in full by the user $4_3$, and the fee ¥1800 for the third round is paid in full by the user $4_1$.

When realizing the above by the method of the related art, users have to adjust the fees among themselves. This is very troublesome for the users.

Second Embodiment

In the present embodiment, a case will be explained where the telecommunications carrier provides not only the communication channel, but also a connection service for the party communication using a party connection providing server 210.

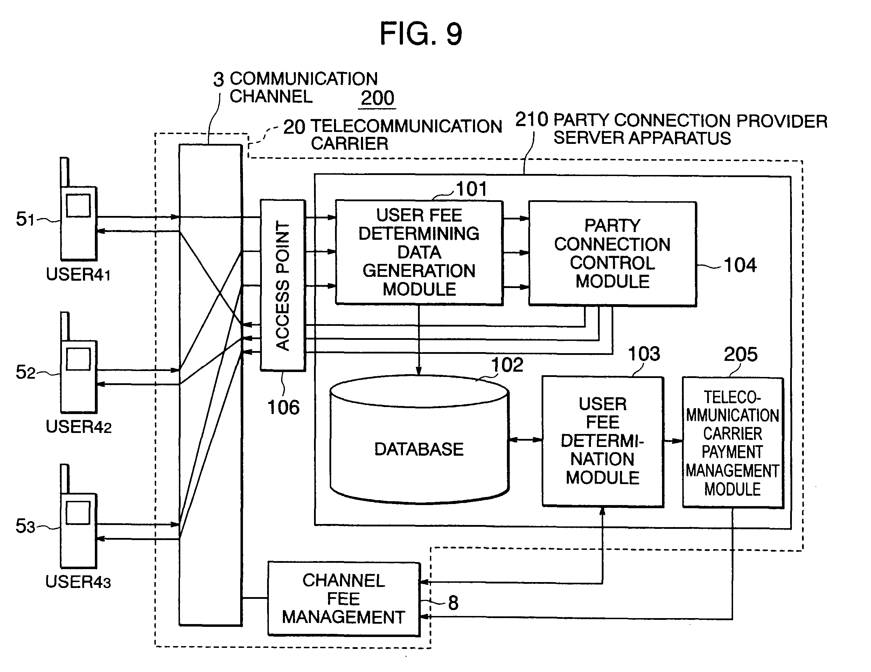

Figure 9 is an overall view of the party communication system 200 of the present embodiment.

As shown in Fig. 9, the party communication system 200 is realized, for example, by using a communication channel 3, terminals $5_1$ to $5_3$ used by the users $4_1$ to $4_3$, a channel fee management apparatus 8, a party connection providing server 210, and an access point 106.

The communication channel 3, channel fee charging apparatus 8, access point 106, and party connection providing server 210 are managed by the telecommunications carrier 20.

In Fig. 9, the communication channel 3, channel fee management apparatus 8, and access point 106 indicated by the same reference numbers as in Fig. 3 are the same as those explained in the first embodiment explained above.

As shown in Fig. 9, the party connection providing server 210 comprises a user fee determining data generation module 101, a database 102, a user fee determination module 103, a party connection control module 104, and a telecommunications carrier notification management module 205.

Namely, in the present embodiment, the party connection providing server 210 comprises the telecommunications carrier notification management module 205, not the telecommunications carrier payment management module 105.

In the present embodiment, communication is performed between the party connection providing server 210 and the channel fee management apparatus 8 so that charging for use of the communication channel 3 and charging for use of the party connection providing server 210 are not duplicated.

For example, when billing the users for the fees for use of the communication channel 3, which is charged to the users for the party communication, by management by the channel fee management apparatus 8, the amounts billed to the respective users determined in the user fee determination module 103 are notified to the channel fee management apparatus 8 from the telecommunications carrier notification management module 205.

Also, when billing the users for the fees for use of the communication channel 3, which is charged to the users for the party communication, by management by the user fee determination module 103, it is notified to the channel fee management apparatus 8 from the telecommunications carrier notification management module 205 not to charge the usage fees for the party communication to the users.

Below, the operations of the party communication system 200 will be explained by focusing on the processing in the party communication providing server 110.

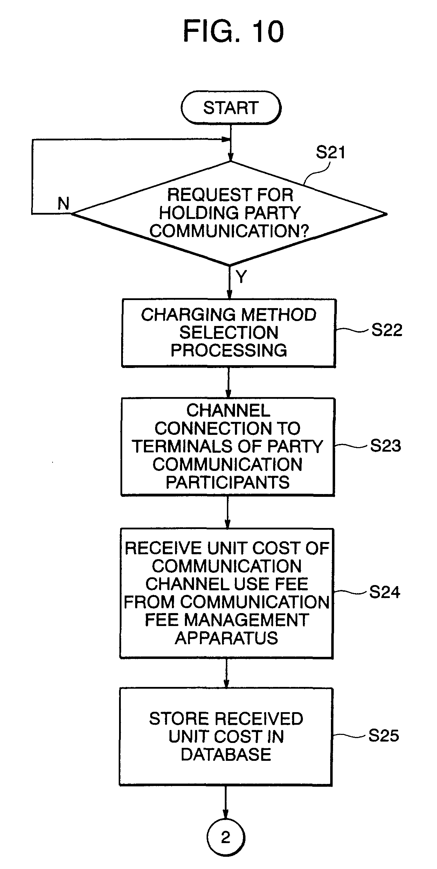

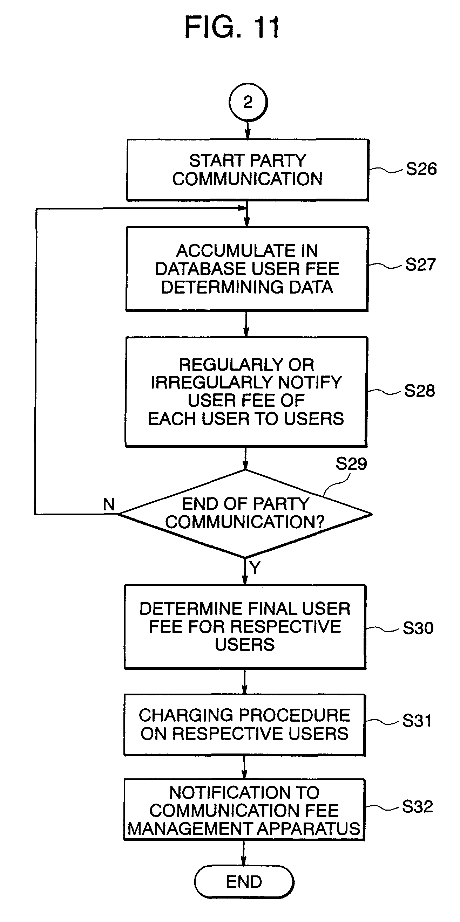

Figures 10 and 11 are flowcharts of the processing in the party connection providing server 210.

Here, the processings of steps S21, S22, S23, S26, S27, S28, S29, S30, and S31 are the same with the processings in S1, S2, S3, S6, S7, S8, S9, S10, and S11 shown in Figs. 6 and 7 in the first embodiment explained above.

Namely, the processing in the party connection providing server 210 is characterized in steps S24, S25, and S32 shown in Figs. 10 and 11.

Step S24: The user fee determination module 103 transmits, for example, telephone numbers of the terminals $5_1$ to $5_3$ to the channel fee management apparatus 8 and receives from the channel fee management apparatus 8 the fees for use the communication channel 3 per unit time by the terminals $5_1$ to $5_3$.

Step S25: The user fee determination module 103 stores in the database 102 the usage fees received from the channel fee management apparatus 8.

Step S32: The telecommunications carrier notification management module 205, for example, notifies the channel fee management apparatus 8 not to charge the users the fees for use of the communication channel 3, which are charged to the users by the party communication, or the usage fees for the party communication.

According to the above party communication system 200, since the telecommunications carrier 20 supplies a party communication connection service by the party connection providing server 210, and the user fee determination module 103 can receive from the channel fee management apparatus 8 a unit cost for use of the communication channel 3 by the terminals $5_1$ to $5_3$ at step S24 shown in Fig. 10, fees can be set reflecting a variety of services (for example, time-zone discount and discount service for particular numbers) provided by the telecommunications carrier 20.

Note that in the above embodiment, a case was explained where a party communication connection service using a party connection providing server 210 was provided by the telecommunications carrier 20. But in the case where the telecommunications carrier 20 and the party connection business 130 are separate, as in the first embodiment, the same effects can be obtained if the telecommunications carrier 20 and the party connection business 130 cooperate and the unit costs for use of the communication channel 3 by the terminals $5_1$ to $5_3$ are transmitted from the channel fee management apparatus 8 to the user fee determination module 103.

Third Embodiment

In the above first embodiment, a case where there is one access point 106 in the communication channel 3 was explained. In the present embodiment, a case where a plurality of access points exist in the communication channel 3 will be explained.

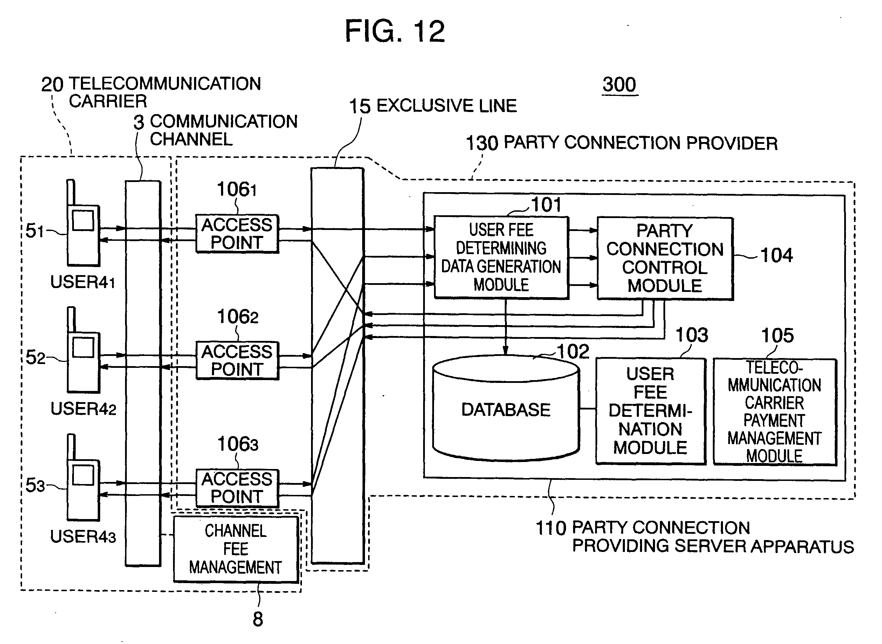

Figure 12 is a view of the overall configuration of the party communication system 300 of the present embodiment.

In Fig. 12, components having the same reference numbers as those in Fig. 3 are the same as those explained in the first embodiment.

As shown in Fig. 12, in the party communication system 300, the telecommunications carrier 20 and the party connection business 130 are separate and the terminals $5_1$ to $5_3$ access the party communication providing server 110 via the nearest access points $106_1$ to $106_3$ in the communication channel 3 and dedicated line 15.

The configuration and processing of the party communication providing server 110 are the same as those explained in the above first embodiment.

According to the party communication system 300, communication using the communication channel 3 is performed between the terminals $5_1$ to $5_3$ and the nearest access points $106_1$ to $106_3$ from them, so the payment to the telecommunications carrier 20 can be lowered compared with the case in the first embodiment at time of party communication. As a result, payment by the users for the party communication can be kept low.

Fourth Embodiment

In the above second embodiment, a case where one access point existed on the communication channel 3 was explained. In the present embodiment, a case where a plurality of access points exists on the communication channel 3 will be explained.

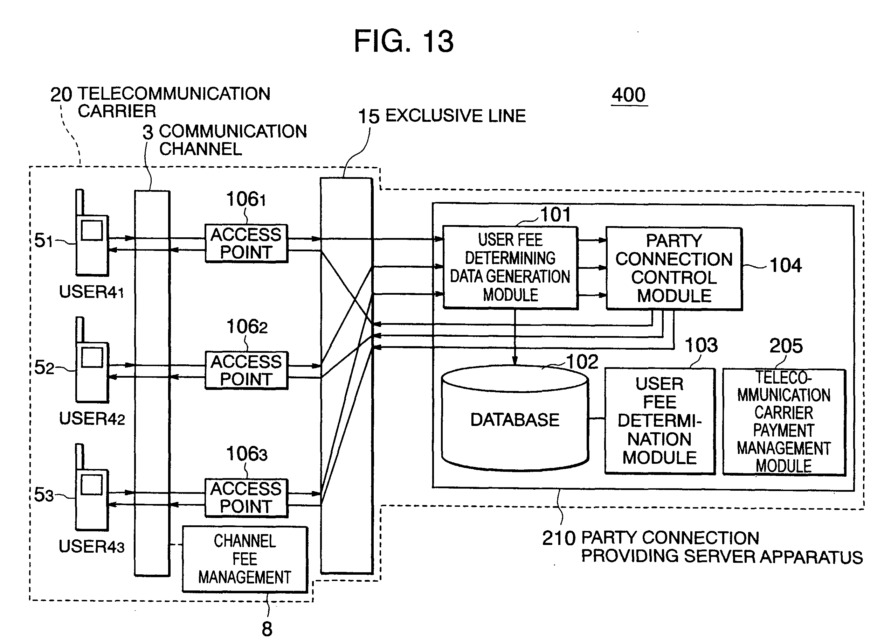

Figure 13 is an overall view of the party communication system 400 of the present embodiment.

In Fig. 13, components having the same reference numbers as those in Fig. 9 are the same as those explained in the second embodiment.

As shown in Fig. 13, in the party communication system 300, the telecommunications carrier 20 manages the party connection providing server 210 and the terminals $5_1$ to $5_3$ access the party connection providing server 210 via the nearest access points $106_1$ to $106_3$ on the communication channel 3 and dedicated line 15.

The configuration and processing of the party connection providing server 210 are the same as those explained in the above second embodiment.

According to the party communication system 400, communication using the communication channel 3 is performed between the terminals $5_1$ to $5_3$ and the nearest access points $106_1$ to $106_3$ from them, so payment by the users for the party communication can be reduced.

The present invention is not limited to the above embodiments.

In the above embodiments, cases where packets transmitted by a terminal were received, combined, and transmitted to other terminals in the party connection providing server were explained. In the present invention, for example, the communication control apparatus managed by the party connection business may be made to control the channels in the communication channel 3 of the packets transmitted by the terminals without receiving the packets transmitted by the terminals so as to enable packets transmitted by one terminal to the other terminals to be received among the plurality of terminals engaged in the same party communication.

Furthermore, in the above embodiments, cases where a plurality of terminals used in the party communication used services of the communication channel 3 under the same charging system provided by the same telecommunications carrier were explained. But the present invention can also be applied to a case where a plurality of terminals used in the party communication use communication channels of different telecommunications carriers or services of different charging systems of the same telecommunications carrier. In this case, the user fee determination module 103 calculates the fees for use of the communication channel based on the telecommunications carrier used by the terminal and the charging system for each of the terminals and manages them so as to pay the channel fees of each of the telecommunications carriers 20.

Also, when the providing medium of the present invention can realize the functions of the party connection providing server of the above embodiments by executing a program for the same in a CPU (central processing unit) or other processor, the invention may also be applied to a storage medium such as a DVD (digital versatile disk) providing the program or a server for delivering the program via a network.

As explained above, according to the present invention, it is possible to provide a communication control apparatus, a communication system, a method thereof, and a providing medium by which fees including fees for use of a communication channel can be easily divided in various ways between users of so-called party communication wherein data transmitted by a plurality of communication devices is transmitted to other communication devices except the terminal which sent the data when performing such party communication.

While the invention has been described with reference to specific embodiment chosen for purpose of illustration, it should be apparent that numerous modifications could be made thereto by those skilled in the art without departing from the basic concept and scope of the invention.

## Claims

1. A communication control apparatus for providing a service for controlling data transmitted by a plurality of communication devices via a communication channel so as to be transmitted to communication devices other than said communication device which transmitted the data, comprising:

   a channel fee calculation means for calculating a first fee to be charged for usage of said communication channel by said plurality of communication devices,
   a service handling fee calculation means for calculating a second fee to be charged for usage of said service, and
   a fee determining means for determining a third fee to be charged to users of said communication devices based on said first fee and said second fee.

2. A communication control apparatus as set forth in claim 1, wherein said channel fee calculation means calculates said first fee based on a charging system established by a telecommunications carrier providing said communication channel.

3. A communication control apparatus as set forth in claim 1, further comprising:
   a payment management means for managing a procedure of payment of said first fee to the telecommunications carrier providing said communication channel.

4. A communication control apparatus as set forth in claim 1, further comprising:
   a communication control means for receiving data transmitted by a plurality of communication devices via said communication channel, combining or copying the received data in accordance with need, then delivering it to communication devices other than said communication devices which transmitted the data.

5. A communication control apparatus as set forth in claim 1, wherein said fee determining means determines said third fee so that the total amount of said first fee and said second fees is charged divided among the users of said plurality of communication devices or charged to a user of one of said communication devices in accordance with an instruction from a user of a communication device transmitting and receiving said data.

6. A communication control apparatus as set forth in claim 1, wherein said fee determining means successively determines said third fees through the communication and notifies the determined third fee to said users during a procedure wherein a plurality of said communication devices perform communication by mutually transmitting and receiving said data.

7.  A communication control apparatus as set forth in claim 1, further comprising a detection means for detecting the number of packets to be transmitted and received by said plurality of communication devices or a time during which said plurality of communication devices are connected to said communication channel,
    wherein said channel fee calculation means calculates said first fee based on detection results by said detection means.

8.  A communication control apparatus as set forth in claim 1, wherein said data is data of at least a video or audio; and
    said communication control apparatus further comprising a communication control means for controlling data transmitted by said plurality of communication devices via said communication channel to be transmitted to communication devices other than said communication devices which transmitted the data so that calls are simultaneously made between users of said plurality of communication devices.

9.  A communication control apparatus as set forth in claim 1, wherein when a business managing said communication control apparatus and a business managing said communication channel are different, use of said communication channel is not charged to users of said communication devices from said business of the communication channel.

10. A communication system, comprising:

    a channel fee management apparatus for managing fees to be charged for use of a communication channel by a communication device;
    a communication control apparatus for providing a service for controlling data transmitted by a plurality of communication devices via said communication channel to be transmitted to communication devices other than said communication devices which transmitted the data; and
    wherein said communication control apparatus comprises:

    a channel fee calculation means for calculating a first fee to be charged for usage of said communication channel by said plurality of communication devices,
    a service handling fee calculation means for calculating a second fee to be charged for usage of said service, and
    a channel fee determining means for determining a third channel fee to be charged to users of said communication devices based on said first channel fee and said second channel fee.

11. A communication system as set forth in claim 10, wherein said channel fee determining means notifies predetermined information to said channel fee management apparatus so that charges to the users of said communication devices for use of said communication channel are not duplicated with said channel fee management apparatus.

12. A communication system as set forth in claim 10, wherein said channel fee determining means receives from said channel fee management apparatus data regarding channel fees to be charged for use of said communication channel at the time said plurality of communication devices transmit and receive said data.

13. A communication system as set forth in claim 10, wherein said communication channel is provided with one or plurality of access points for relaying communication between said communication control apparatus and said communication devices and users of said communication devices are charged channel fees for use of said communication channel for communication with the access points via said communication channel.

14. A communication system as set forth in claim 10, wherein a channel fee management apparatus and communication control apparatus are managed by different businesses.

15. A communication system as set forth in claim 10, wherein a channel fee management apparatus and communication control apparatus are managed by the same business.

16. A communication control method for providing a service for controlling data transmitted from a plurality of communication devices via a communication channel to be transmitted to communication devices other than said communication devices which transmitted the data, comprising the steps of:

calculating a first fees to be charged to users of said communication devices based on said calculated fees and fees to be charged for use of said communication channel,

calculating a second fee to be charged for usage of said service, and

determining a third fee to be charged to users of said communication devices based on said first fee and said second fee.

**17.** A communication control method as set forth in claim 16, comprising the step of:

calculating said first fee based on a charging system established by a telecommunications carrier providing said communication channel.

**18.** A communication control method as set forth in claim 16, comprising the step of:

receiving data transmitted by a plurality of communication devices via said communication channel, composing or copying the received data in accordance with need, then delivering it to communication devices other than said communication devices which transmitted the data.

**19.** A communication control method as set forth in claim 16,

wherein said data is data of at least a video or audio; and

comprising a step of controlling data transmitted by said plurality of communication devices via said communication channel to be transmitted to communication devices other than said communication devices which transmitted the data so that calls are simultaneously made between users of said plurality of communication devices.

**20.** A computer program for providing a service for controlling data transmitted from a plurality of communication devices via a communication channel to be transmitted to communication devices other than said communication devices which transmitted the data, comprising the routines for:

calculating fees to be charged for usage of said communication channel by said plurality of communication devices, and

determining fees to be charged to users of said communication devices based on said calculated fees and fees to be charged for said controlling by the communication control apparatus.

**21.** A computer program as set forth in claim 20, further comprising routine for:

receiving data transmitted by a plurality of communication devices via said communication channel, composing or copying the received data in accordance with need, then delivering it to communication devices other than said communication devices which transmitted the data.

**22.** A computer program as set forth in claim 20,

wherein said data is data of at least a video or audio; and

said computer program further comprising a routine for controlling data transmitted by said plurality of communication devices via said communication channel to be transmitted to communication devices other than said communication devices which transmitted the data so that calls are simultaneously made between users of said plurality of communication devices.

FIG. 1

51 USER41
52 USER42
53 USER43

3 COMMUNICATION CHANNEL

ACCESS POINT

6

CHANNEL FEE CONTROL APPARATUS — 8

PARTY CONNECTION SERVICE FEE CHARGING APPARATUS — 7

9 PARTY CONNECTION CONTROL MODULE

PACKET COLLECTION
10

PACKET COPY/ COMPOSE
11

PACKET DISTRI- BUTION
12

2 PARTY CONNECTION PROVIDER SERVER APPARATUS

EP 1 134 931 A2

# FIG. 2

EP 1 134 931 A2

# FIG. 3

3 COMMUNICATION CHANNEL

100

20 TELECOMMUNICATION CARRIER

130 PARTY CONNECTION PROVIDER

51 ─ USER4₁

52 ─ USER4₂

53 ─ USER4₃

ACCESS POINT

106

101
USER FEE DETERMINING DATA GENERATION MODULE

PARTY CONNECTION CONTROL MODULE

104

102
DATABASE

103
USER FEE DETERMINATION MODULE

105
TELECOMMUNICATION CARRIER PAYMENT MANAGEMENT MODULE

CHANNEL FEE MANAGEMENT

8

110 PARTY CONNECTION PROVIDING SERVER APPARATUS

EP 1 134 931 A2

# FIG. 4

| |
|---|
| PACKET COUNTER — 150 |
| CONNECTION DURATION DETECTOR — 151 |
| CALL TIME DETECTOR — 152 |

101 USER FEE CALCULATION
DATA GENERATION MODULE

# FIG. 5

COMMUNICATION CHANNEL
USE FEE CALCULATION
UNIT — 160

PARTY CONNECTION
SERVICE USE FEE
CALCULATION UNIT — 161

USER FEE
DETERMINATION UNIT — 162

103 USER FEE
DETERMINATION MODULE

# FIG. 6

START

S1

REQUEST FOR
HOLDING PARTY
COMMUNICATION?

N

Y

CHARGING METHOD
SELECTION
PROCESSING — S2

CHANNEL CONNECTION
TO TERMINALS OF
PARTY
COMMUNICATION
PARTICIPANTS — S3

SPECIFY UNIT COST OF
COMMUNICATION CHANNEL
USE FEE FROM TELEPHONE
NUMBER OF TERMINAL OF
PARTY COMMUNICATION
PARTICIPANT — S4

STORE SPECIFIED
UNIT COST IN
DATABASE — S5

1

# FIG. 7

```
                    ( 1 )
                      │
                      ▼
        ┌──────────────────────┐
        │    START PARTY       │ ～ S6
        │    COMMUNICATION     │
        └──────────────────────┘
                      │
    ┌─────────────────┤
    │                 ▼
    │     ┌──────────────────────┐
    │     │    ACCUMULATE IN     │
    │     │  DATABASE USER FEE   │ ～ S7
    │     │  DETERMINING DATA    │
    │     └──────────────────────┘
    │                 │
    │                 ▼
    │     ┌──────────────────────┐
    │     │    REGULARLY OR      │
    │     │  IRREGULARLY NOTIFY  │
    │     │     USER FEE OF      │ ～ S8
    │     │   EACH USER TO USERS │
    │     └──────────────────────┘
    │                 │            S9
    │                 ▼
    │   N      ╱─────────────────╲
    └─────────   END OF PARTY
              ╲  COMMUNICATION?  ╱
                ╲───────────────╱
                      │ Y
                      ▼
        ┌──────────────────────┐
        │  DETERMINE FINAL USER│
        │   FEE FOR RESPECTIVE │ ～ S10
        │        USERS         │
        └──────────────────────┘
                      │
                      ▼
        ┌──────────────────────┐
        │  CHARGING PROCEDURE  │ ～ S11
        │  ON RESPECTIVE USERS │
        └──────────────────────┘
                      │
                      ▼
        ┌──────────────────────┐
        │     PAYMENT TO       │
        │   COMMUNICATION      │ ～ S12
        │  CHANNEL PROVIDER    │
        └──────────────────────┘
                      │
                      ▼
               (  END  )
```

## FIG. 8

CHARGING METHOD SELECTION SCREEN

① . PAYING EQUALLY        [SELECT] ~1721

② . IN ACCORDANCE
      WITH DISTANCE        [SELECT] ~1722

③ . PAYING ALL            [SELECT] ~1723

④ . PREPAID               [SELECT] ~1724

⑤ . DETERMINING BY
      GAME                [SELECT] ~1725

~170

~171          (OK) ~172

CHARGING METHOD SELECTION SCREEN

EP 1 134 931 A2

# FIG. 9

3 COMMUNICATION CHANNEL  200

20 TELECOMMUNICATION CARRIER

210 PARTY CONNECTION PROVIDER SERVER APPARATUS

51 — USER4₁

52 — USER4₂

53 — USER4₃

ACCESS POINT

106

101

USER FEE DETERMINING DATA GENERATION MODULE

PARTY CONNECTION CONTROL MODULE

104

102

DATABASE

103

USER FEE DETERMINATION MODULE

205

TELECOMMUNICATION CARRIER PAYMENT MANAGEMENT MODULE

CHANNEL FEE MANAGEMENT

8

EP 1 134 931 A2

# FIG. 10

START

S21

REQUEST FOR HOLDING PARTY COMMUNICATION?

N

Y

CHARGING METHOD SELECTION PROCESSING — S22

CHANNEL CONNECTION TO TERMINALS OF PARTY COMMUNICATION PARTICIPANTS — S23

RECEIVE UNIT COST OF COMMUNICATION CHANNEL USE FEE FROM COMMUNICATION FEE MANAGEMENT APPARATUS — S24

STORE RECEIVED UNIT COST IN DATABASE — S25

2

# FIG. 11

```
                    ( 2 )
                      │
                      ▼
        ┌──────────────────────────┐
        │      START PARTY         │────── S26
        │     COMMUNICATION        │
        └──────────────────────────┘
                      │
          ┌───────────┤
          │           ▼
          │  ┌──────────────────────────┐
          │  │      ACCUMULATE IN       │
          │  │   DATABASE USER FEE      │────── S27
          │  │    DETERMINING DATA      │
          │  └──────────────────────────┘
          │           │
          │           ▼
          │  ┌──────────────────────────┐
          │  │       REGULARLY OR       │
          │  │   IRREGULARLY NOTIFY     │
          │  │       USER FEE OF        │────── S28
          │  │    EACH USER TO USERS    │
          │  └──────────────────────────┘
          │           │           S29
          │           ▼         ╱
          │        ╱◇◇◇◇◇◇◇◇◇◇◇◇◇╲
          │   N  ╱   END OF PARTY   ╲
          └────◇   COMMUNICATION?    ◇
               ╲                    ╱
                ╲◇◇◇◇◇◇◇◇◇◇◇◇◇◇◇◇◇╱
                      │ Y
                      ▼
        ┌──────────────────────────┐
        │   DETERMINE FINAL USER   │
        │   FEE FOR RESPECTIVE     │────── S30
        │         USERS            │
        └──────────────────────────┘
                      │
                      ▼
        ┌──────────────────────────┐
        │   CHARGING PROCEDURE     │────── S31
        │   ON RESPECTIVE USERS    │
        └──────────────────────────┘
                      │
                      ▼
        ┌──────────────────────────┐
        │     NOTIFICATION TO      │
        │  COMMUNICATION FEE       │────── S32
        │ MANAGEMENT APPARATUS     │
        └──────────────────────────┘
                      │
                      ▼
                 (   END   )
```

# FIG. 12

20 TELECOMMUNICATION CARRIER

3 COMMUNICATION CHANNEL

15 EXCLUSIVE LINE

300

130 PARTY CONNECTION PROVIDER

51 — USER41

52 — USER42

53 — USER43

1061 ACCESS POINT

1062 ACCESS POINT

1063 ACCESS POINT

8 CHANNEL FEE MANAGEMENT

101 USER FEE DETERMINING DATA GENERATION MODULE

104 PARTY CONNECTION CONTROL MODULE

102 DATABASE

103 USER FEE DETERMINATION MODULE

105 TELECOMMUNICATION CARRIER PAYMENT MANAGEMENT MODULE

110 PARTY CONNECTION PROVIDING SERVER APPARATUS

EP 1 134 931 A2

## FIG. 13

20 TELECOMMUNICATION CARRIER

3 COMMUNICATION CHANNEL

15 EXCLUSIVE LINE

400

51 — USER41

52 — USER42

53 — USER43

1061 ACCESS POINT

1062 ACCESS POINT

1063 ACCESS POINT

8 CHANNEL FEE MANAGEMENT

101 USER FEE DETERMINING DATA GENERATION MODULE

104 PARTY CONNECTION CONTROL MODULE

102 DATABASE

103 USER FEE DETERMINATION MODULE

205 TELECOMMUNICATION CARRIER PAYMENT MANAGEMENT MODULE

210 PARTY CONNECTION PROVIDING SERVER APPARATUS

EP 1 134 931 A2